# EUROPEAN PATENT APPLICATION

(11) **EP 4 411 472 A1**
(43) Date of publication of application: **07.08.2024**
(21) Application number: 22875022.0
(22) Date of filing: 28.09.2022
(51) Int. Cl.: G02F 1/163

(54) **GEAR SHIFTING CONTROL METHOD AND APPARATUS FOR ELECTROCHROMIC DEVICE, AND ELECTROCHROMIC DEVICE**

(30) Priority: 30.09.2021 CN 202111161177; 16.09.2022 CN 202211129611
(71) Applicant: Guangyi Intelligent Tech (Suzhou) Co., Ltd., Suzhou, Jiangsu 215000 (CN)
(72) Inventor: ZHONG, Zhuohong, Suzhou, Jiangsu 215000 (CN); XIONG, Chenbi, Suzhou, Jiangsu 215000 (CN); GAO, Haoxin, Suzhou, Jiangsu 215000 (CN); XING, Xiaoshu, Suzhou, Jiangsu 215000 (CN)
(74) Representative: Wallinger Ricker Schlotter Tostmann
(86) International application number: PCT/CN2022/122265
(87) International publication number: WO 2023/051639

(57) **Abstract**

Provided are a gear switching control method and apparatus for an electrochromic device and an electrochromic device. The electrochromic device pre-stores gear characterization parameter data. The method includes steps described below. During a process of switching from an initial gear before gear switching to an initial target gear, a gear characterization parameter state of the electrochromic device is acquired, and when a new gear switching signal is received, a new target gear is acquired and a current charging operation or a current discharging operation is interrupted. A charging direction or a discharging direction after the interruption operation and a corresponding gear characterization parameter adjustment value are determined according to the gear characterization parameter state when the interruption operation is performed and a gear characterization parameter corresponding to the initial gear and a gear characterization parameter corresponding to the new target gear, or according to the gear characterization parameter state when the interruption operation is performed and a gear characterization parameter corresponding to the new target gear. The electrochromic device is adjusted to switch to the new target gear according to the charging direction or the discharging direction and the corresponding gear characterization parameter adjustment value. The method can solve the problem that the gear switching process cannot be interrupted, so that the gear switching waiting time of the user is reduced.

## Description

This application claims priority to Chinese Patent Application No.202111161177.6 filed with the China National Intellectual Property Administration (CNIPA) on Sept. 30, 2021 and titled *Gear Shifting Control Method And Apparatus For Electrochromic Device, And Electrochromic Device* and priority to Chinese Patent Application No. 202211129611.7 filed with the CNIPA on Sept. 16, 2022 and titled *Gear Shifting Control Method And Apparatus For Electrochromic Device, And Electrochromic Device*, the disclosures of which are incorporated herein by reference in their entireties.

### TECHNICAL FIELD

The present application relates to the field of electrochromic technology, in particular to a gear switching control method and apparatus for an electrochromic device and an electrochromic device.

### BACKGROUND

This part provides background information related to the present disclosure, but this information does not necessarily constitute the related art.

In the related art, electrochromic materials are generally used for room windows and car windshields to achieve optical performance switching between different color states. To adapt to different scenes and applications, sometimes the electrochromic device may further be set with multiple different gears, and each gear corresponds to different transmittance or reflectivity, allowing users to adjust the device to the most suitable state for use according to requirements.

However, for some large-sized electrochromic devices, a phenomenon of slow color change usually occurs. The color change requires relatively long time when gears are switched, and the device cannot be operated during the switching process. Therefore, some problems exist during the actual gear switching operation. For example, if the user accidentally touches, reverse switching can be performed only after the color change is completed, and then the device can return to initial gear. This process will take a lot of time and affect the user experience. For example, when the user switches gears (such as from the first gear to the seventh gear), the actual use effect may be achieved when an intermediate gear (such as the fifth gear) is switched to. However, since the gear switching process of electrochromic devices in the related art cannot be interrupted, it is necessary to completely switch to the seventh gear first, and then switch back to the fifth gear, resulting in relatively long waiting time and affecting the user experience.

### SUMMARY

In view of this, embodiments of the present application provide a gear switching control method and apparatus for an electrochromic device and an electrochromic device, so that the problem that the gear switching process cannot be interrupted can be effectively solved, the gear switching requirement can be responded quickly, the gear switching waiting time of the user can be reduced, and thus the user experience can be improved.

In a first aspect, an embodiment of the present application provides a gear switching control method for an electrochromic device, where the electrochromic device pre-stores gear characterization parameter data. The method may include:

During a process of switching from an initial gear before gear switching to an initial target gear, a gear characterization parameter state of the electrochromic device may be acquired, and when a new gear switching signal is received, a new target gear may be acquired and a current charging operation or a current discharging operation is interrupted.

A charging direction or a discharging direction after the interruption operation and a corresponding gear characterization parameter adjustment value may be determined according to a gear characterization parameter state when the interruption operation is performed and a gear characterization parameter corresponding to the initial gear and a gear characterization parameter corresponding to the new target gear, or according to a gear characterization parameter state when the interruption operation is performed and gear characterization parameter corresponding to the new target gear.

The electrochromic device may be adjusted to switch to the new target gear according to the charging direction or the discharging direction, and the gear characterization parameter adjustment value.

In some optional embodiments, the gear switching control method for an electrochromic device may further include:
During the process of switching from the initial gear before the gear switching to the initial target gear, a number of new gear switching signals received each time is accumulated, and when it is detected that a count value of times of gear switching is greater than or equal to a preset time number threshold, a secondary target gear corresponding to a gear switching signal when the count value is equal to the preset time number threshold may be acquired.

The charging direction or the discharging direction after the interruption operation and the corresponding gear characterization parameter adjustment value may be determined according to a corresponding gear characterization parameter state according to a received gear switching signal when the count value is equal to the preset time number threshold and the gear characterization parameter corresponding to the initial gear and a gear characterization parameter corresponding to the secondary target gear, or according to a gear characterization parameter state corresponding to a received gear switching signal when the count value is equal to the preset time number threshold and the gear characterization parameter corresponding to the new target gear to directly adjust the electrochromic device to switch to the secondary target gear.

In some optional embodiments, the gear switching control method for an electrochromic device may further include:
During a process of switching to the secondary target gear, if at least one new gear switching signal is received within unit time, a gear corresponding to a last gear switching signal may be as a final target gear.

After the secondary target gear is switched to, a charging direction or a discharging direction after an interruption operation corresponding to the last gear switching signal and a corresponding gear characterization parameter adjustment value may be determined according to the gear characterization parameter corresponding to the secondary target gear and a gear characterization parameter corresponding to the final target gear to readjust the electrochromic device to switch to the final target gear.

In some optional embodiments, the gear characterization parameter data may include charge capacity data of the electrochromic device at different gears, and the acquired gear characterization parameter state may be a real-time charge capacity change value input into or released by the electrochromic device.

The step of acquiring the gear characterization parameter state when the interruption operation is performed may include:
A real-time charge capacity change value recorded when the interrupt operation is performed is read.

The step of determining the charging direction or the discharging direction after the interruption operation and the corresponding gear characterization parameter adjustment value according to the gear characterization parameter state during the interruption operation, the gear characterization parameter corresponding to the initial gear and the gear characterization parameter corresponding to the new target gear may include:
A charge capacity difference value between the new target gear and the initial gear is calculated.

Whether the charging direction or the discharging direction is after the interruption operation may be determined according to a comparison result between the charge capacity difference value and the real-time charge capacity change value acquired when the interruption operation is performed, and an absolute value of the difference value between the charge capacity difference value and the real-time charge capacity change value is used as a charge capacity adjustment value of the corresponding direction.

In some optional embodiments, the gear characterization parameter data may include open circuit voltages and charge capacity data corresponding to the electrochromic device at different gears, and the acquired gear characterization parameter state may comprise an open circuit voltage of the electrochromic device.

The step of acquiring the gear characterization parameter state when the interruption operation is performed may include:
After a first preset time period is waited for, an open circuit voltage after the electrochromic device stabilizes may be predicted according to a rate of change of a real-time open circuit voltage of the electrochromic device during the first preset time period to determine a current gear when the interruption operation is performed.

Alternatively, after a second preset time period is waited for, a current open circuit voltage of the electrochromic device may be read to determine a current gear when the interruption operation is performed; where the first preset time period is shorter than the second preset time period.

In some embodiments, the step of predicting the open circuit voltage after the electrochromic device stabilizes according to the rate of change of the real-time open circuit voltage of the electrochromic device during the first preset time period may include:
A correction factor of the open circuit voltage may be determined according to the open circuit voltage rate of change corresponding to the real-time open circuit voltage and calculated according to an interruption open circuit voltage of the electrochromic device when the interruption operation is performed and a real-time open circuit voltage of the electrochromic device after the first preset time.

The real-time open circuit voltage may be corrected by using the correction factor to obtain an open circuit voltage correction value as a prediction open circuit voltage when the electrochromic device stabilizes.

In some optional embodiments, the step of determining the correction factor may include steps described below. In a case where the open circuit voltage rate of change is equal to or approaches 0, the correction factor K is 0; in a case where the open circuit voltage rate of change does not approach 0, that is, a deviation exists between the open circuit voltage rate of change and 0, the correction factor is positively correlated with an absolute value of the open circuit voltage rate of change, that is, the larger the absolution value of the slope, the larger the value of the correction factor.

In some optional embodiments, the step of determining the charging direction or the discharging direction after the interruption operation and the corresponding gear characterization parameter adjustment value according to the gear characterization parameter state when the interruption operation is performed and the gear characterization parameter corresponding to the new target gear may include:

The step of calculating a charge capacity adjustment value based on the interruption open circuit voltage may specifically include the step described below. The charging direction or the discharging direction after the interruption operation and a corresponding charge capacity adjustment value are determined according to the interruption open circuit voltage of the electrochromic device when the interruption operation is performed and a target open circuit voltage of the new target gear and in combination with the open circuit voltages and the charge capacity data corresponding to the electrochromic device at the different gears.

Alternatively, the step of calculating a charge capacity adjustment value based on the prediction open circuit voltage or a stable open circuit voltage read after the second preset time period is waited for may specifically include the step described below. The charging direction or the discharging direction after the interruption operation and a corresponding charge capacity adjustment value are determined according to the prediction open circuit voltage or the stable open circuit voltage and a target open circuit voltage of the new target gear and in combination with the open circuit voltages and the charge capacity data corresponding to the electrochromic device at the different gears.

In some optional embodiments, during the step of calculating the charge capacity adjustment value based on the interruption open circuit voltage, the method may further include:

After the charge capacity adjustment value is controlled to be charged or released, after a third preset time period is waited for, and when a gear switching signal of the new target gear is re-received, an adjusted stable open circuit voltage may be acquired.

A required charge capacity supplementary value is acquired according to the adjusted stable open circuit voltage and the target open circuit voltage of the new target gear and in combination with the open circuit voltages and the charge capacity data corresponding to the electrochromic device at the different gears.

The electrochromic device may be re-adjusted according to the charge capacity supplementary value to reach the new target gear.

In some optional embodiments, the gear switching control method for an electrochromic device may further include steps described below.

A difference value between the acquired interruption open circuit voltage and the target open circuit voltage of the new target gear is calculated.

If the difference value is within a first preset range, the step of calculating the charge capacity adjustment value based on the prediction open circuit voltage or the stable open circuit voltage may be performed.

If the difference value is within a second preset range, the step of calculating the charge capacity adjustment value based on the interruption open circuit voltage may be performed, and a readjustment is performed based on the adjusted stable open circuit voltage after the electrochromic device is adjusted according to a charge capacity calculated through the interruption open circuit voltage; where an absolute value of a value in the second preset range is less than an absolute value of a value in the first preset range.

In some optional embodiments, before switching from the initial gear to the initial target tear, the gear switching control method for an electrochromic device may further include:

When it is detected that an initial gear switching signal is received, a current open circuit voltage of the electrochromic device is detected to determine a current actual gear, and the current actual gear is used as the initial gear.

The initial target gear is acquired from the initial gear switching signal, and a charge capacity corresponding to the initial gear is subtracted from a charge capacity corresponding to the initial target gear to obtain a charge capacity required as an adjustment for switching from the initial gear to the initial target gear.

In a second aspect, an embodiment of the present application provides a gear switching control apparatus for an electrochromic device, where the electrochromic device pre-stores gear characterization parameter data. The apparatus may include:

An acquiring module, which is configured to, during a process of switching from an initial gear before gear switching to an initial target gear, acquire a gear characterization parameter state of the electrochromic device, and when a new gear switching signal is received, acquire a new target gear and interrupt a current charging operation or a current discharging operation;
a determing module, which is configured to determine a charging direction or a discharging direction after the interruption operation and a corresponding gear characterization parameter adjustment value according to a gear characterization parameter state when the interruption operation is performed and a gear characterization parameter corresponding to the initial gear and a gear characterization parameter corresponding to the new target gear or according to a gear characterization parameter state when the interruption operation is performed and a gear characterization parameter corresponding to the new target gear; and
an adjusting module, which configured to adjust the electrochromic device to switch to the new target gear according to the charging direction or the discharging direction and the corresponding gear characterization parameter adjustment value.

In a third aspect, an embodiment of the present application provides an electrochromic device. The electrochromic device may include a processor and a memory. The memory may store a computer program. The processor may be configured to execute the computer program to implement the preceding gear switching control method for an electrochromic device.

In a fourth aspect, an embodiment of the present application provides a readable storage medium storing a computer program which, when executed by a processor, may implement the preceding gear switching control method for an electrochromic device.

The embodiments of the present application may have beneficial effects described below.

According to the gear switching control method for an electrochromic device in the present application, during a process of switching from an initial gear before gear switching to an initial target gear, a gear characterization parameter state of the electrochromic device is acquired, and when a new gear switching signal is received, a new target gear is acquired and a current charging operation or a current discharging operation is interrupted; then an adjustment direction after the interruption and a gear characterization parameter adjustment value are determined according to the gear characterization parameter state when the interruption operation is performed and in combination with a gear characterization parameter corresponding to the new target gear, so that the new target gear is directly switched to. The method can solve the problem that the gear switching process is interrupted; for the user, the gear switching waiting time of the user is reduced, the response to the gear switching interruption operation of the user is accelerated, and the user experience is improved.

### BRIEF DESCRIPTION OF DRAWINGS

To illustrate technical solutions in embodiments of the present application more clearly, drawings used in description of the embodiments will be briefly described below. It is to be understood that the subsequent drawings only illustrate part of embodiments of the present application and should not be construed as limiting the scope. Those of ordinary skill in the art may obtain other drawings based on the drawings described below on the premise that no creative work is done.
FIG. 1 is a first flowchart of a gear switching control method for an electrochromic device according to some embodiments of the present application;
FIG. 2 is a second flowchart of a gear switching control method for an electrochromic device according to some embodiments of the present application;
FIG. 3 is a first flowchart of a gear switching control method for an electrochromic device according to other embodiments of the present application;
FIG. 4 is a second flowchart of a gear switching control method for an electrochromic device according to other embodiments of the present application;
FIG. 5 is a flowchart of a gear switching control method for an electrochromic device according to other embodiments of the present application;
FIG. 6 is a flowchart of a gear switching control method for an electrochromic device according to other embodiments of the present application; and
FIG. 7 is a structural diagram of a gear switching control apparatus for an electrochromic device according to other embodiments of the present application.

### DETAILED DESCRIPTION

The technical solutions in embodiments of the present application are described clearly and completely in conjunction with the drawings in the embodiments of the present application. Apparently, the embodiments described below are part, not all, of embodiments of the present application.

Generally, components of the embodiments of the present application described and illustrated in the drawings herein may be arranged and designed through various types of configuration. Therefore, the following detailed description of the embodiments of the present application and shown in the drawings is not intended to limit the scope of the present application, but merely to illustrate the selected embodiments of the present application. Based on the embodiments of the present application, all other embodiments obtained by those skilled in the art on the premise that no creative work is done are within the scope of the present application.

In the following, the terms "including", "having" and their cognates that may be used in various embodiments of the present application are merely intended to represent specific features, numbers, steps, operations, elements, components or combinations of the aforementioned, and should not be understood as the possibility of first excluding the existence of one or more other features, numbers, steps, operations, elements, components or combinations of the aforementioned, or adding one or more features, numbers, steps, operations, components, components, or combinations of the aforementioned. Moreover, the terms "first", "second" and "third" are merely for distinguishing the description and are not to be construed as indicating or implying relative importance.

Unless otherwise limited, all terms used herein (including technical terms and scientific terms) have meanings the same as those commonly understood by those of ordinary skill in the art to which the various embodiments of the present application belong. The terms (such as those defined in commonly used dictionaries) will be interpreted as having the same contextual meaning as in the relevant technical field and will not be interpreted as having idealized or overly formal meanings unless clearly defined in the various embodiments of the present application.

Some embodiments of the present application will be described hereinafter in conjunction with the drawings. If not in collision, the embodiments described herein and the features thereof may be combined with each other.

Large-sized electrochromic devices often take a long time to complete gear switching. To reduce the waiting time of the user in scenes such as gear switching interruption requirements caused by accidental touch or purposeful touch by the user, the present application provides a gear switching control method for an electrochromic device. In the process of performing gear switching, related parameters for representing gears are acquired in real time, so that when a new gear switching signal is received during the gear switching process, direct switching in the gear switching process is achieved in combination with corresponding target gear information without switching to an initial target gear and then to the latest target gear. In this manner, the waiting time of the user can be greatly reduced, and thus the user experience is ensured to be improved.

In the present application, the electrochromic device may be set with multiple gears for quantitative control of transmittance of the device. For example, division of multiple gears may be performed according to the degree of change in the transmittance of the electrochromic device. Specifically, the higher the transmittance, the higher the defined gear, which corresponds to a larger numerical value; the lower the transmittance, the lower the gear, which corresponds to a smaller numerical value. For another example, division of multiple gears may be performed according to state voltages of the electrochromic device, such as the magnitude of an open circuit voltage (open circuit voltage, OCV). For example, the larger the OCV, the higher the defined gear; otherwise, the smaller the OCV, the lower the gear, etc.

In addition to the preceding gear division setting according to parameters such as the transmittance and state voltages, other parameters related to the optical performance of the electrochromic device may also be used for setting, such as the magnitude of a charge capacity Q, which is not limited here. It is to be understood that when setting is performed according to corresponding parameter types, data covering gear characterization parameters of different gears will be stored in the electrochromic device for query and use during future gear switching. It is to be noted that corresponding relationships may also exist between parameters of the electrochromic device at the same gear. Therefore, the user can establish and store corresponding relationships between corresponding parameters at different gears according to specific actual requirements. For example, a functional relationship of gears or transmittance, open circuit voltages OCV and charge capacities Q may be established. This functional relationship may be obtained by pretesting the electrochromic device. In addition, the advantage of using the stored functional relationship also includes that it is not necessary to list data corresponding to the open circuit voltage and the charge capacity at each gear. Moreover, when the electrochromic device needs to be calibrated, it is only necessary to modify the functional relationship without adjusting all data.

Description will be made below in conjunction with specific embodiments.

Next, some embodiments of the present application will be described in detail with reference to the drawings.

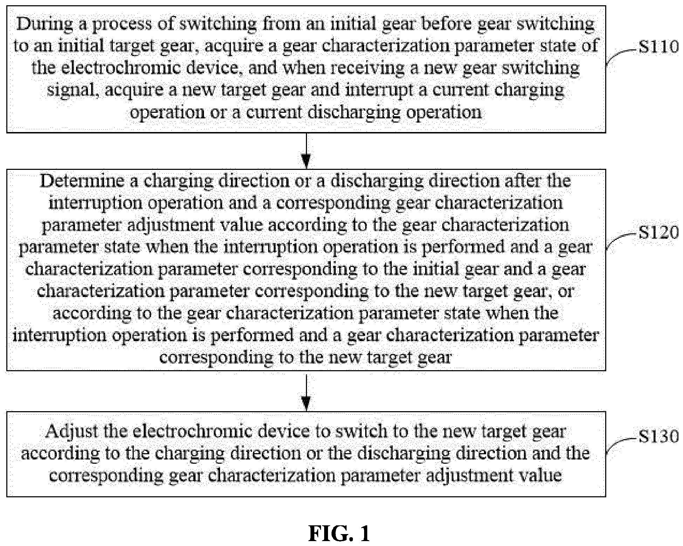

FIG. 1 is a first flowchart of a gear switching control method for an electrochromic device according to an embodiment of the present application. Exemplarily, the gear switching control method for an electrochromic device includes steps S110 to S 130, that is, several steps of acquiring a gear characterization parameter state when the interruption operation is performed, determining a gear characterization parameter adjustment value and adjusting to a new target gear, respectively. Each step is explained in detail below.

S110 of acquiring the gear characterization parameter state when the interruption operation is performed is that during a process of switching from an initial gear before gear switching to an initial target gear, a gear characterization parameter state of the electrochromic device is acquired, and when a new gear switching signal is received, a new target gear is acquired and a current charging operation or a current discharging operation is interrupted.

In the embodiment, the electrochromic device pre-stores gear characterization parameter data related to division of multiple gears. The preceding gear characterization parameter state is related to a stored gear characterization parameter. For example, if the stored gear characterization parameter includes charge capacity data corresponding to different gears, the gear characterization parameter state may be data related to the charge capacity, such as a change value of an input or released charge capacity of the electrochromic device, or a current charge quantity of the electrochromic device.

Exemplarily, in the process of performing the gear switching operation, the state of the related gear characterization parameter of the electrochromic device may be monitored in real time for subsequent gear adjustment after the interruption. At the same time, before switching to the initial target gear, whether a new gear switching signal is received is detected. If a new gear switching signal is received, a new target gear to be switched to can be obtained from the new gear switching signal, while a current charging operation or a current discharging operation is also interrupted.

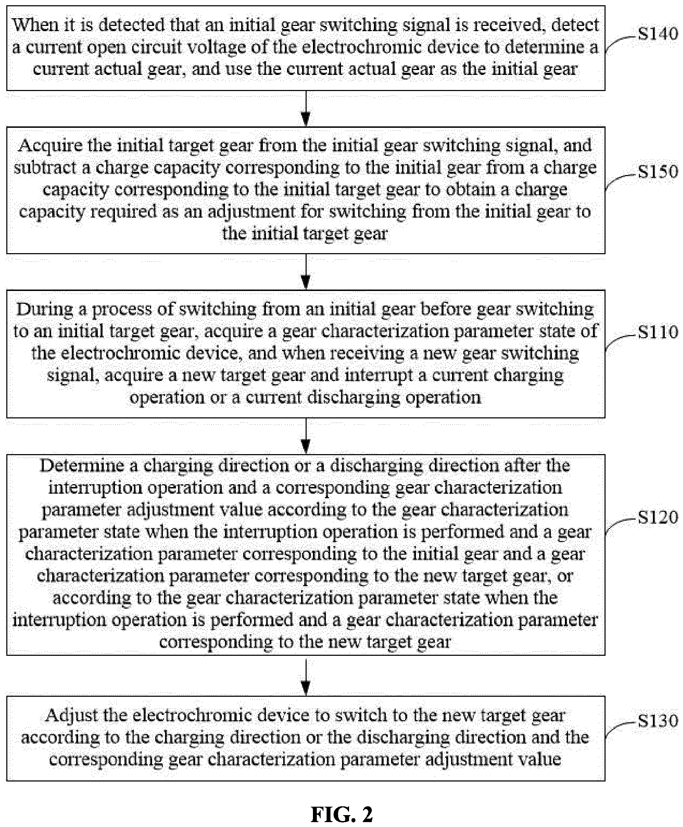

The preceding initial gear refers to a current actual gear of the electrochromic device before the gear switching operation is performed. In an implementation, as shown in FIG. 2, before switching from the initial gear to the initial target tear, the gear switching control method for an electrochromic device further includes steps described below.

In S140, when it is detected that an initial gear switching signal is received, a current open circuit voltage of the electrochromic device is detected to determine a current actual gear, and the current actual gear is used as the initial gear.

In S 150, the initial target gear is acquired from the initial gear switching signal, and a charge capacity corresponding to the initial gear is subtracted from a charge capacity corresponding to the initial target gear to obtain a charge capacity that needs to be adjusted for switching from the initial gear to the initial target gear.

Exemplarily, when receiving an initial gear switching signal, the electrochromic device may obtain target gear information carried in the gear switching signal through signal analysis, thereby obtaining the initial target gear. Further, the stored open circuit voltages and charge capacity data corresponding to the electrochromic device at different gears are queried, so that charge capacities corresponding to the initial target gear and the initial gear can be acquired, respectively.

Then, the charge capacity of the initial gear is subtracted from the charge capacity of the initial target gear so that a charge capacity difference value required as the adjustment for switching from the current actual gear to the initial target gear can be obtained. If the difference value is a positive value, it is indicated that charging is required, otherwise, it is indicated that discharging is required. Then, the adjustment is performed according to a control mode corresponding to the current environmental condition. For example, the adjustment may be performed in a constant voltage manner or a constant current manner, which is not limited here.

S120 of determining the gear characterization parameter adjustment value includes that a charging direction or a discharging direction after the interruption operation and a corresponding gear characterization parameter adjustment value are determined according to a gear characterization parameter state when the interruption operation is performed and a gear characterization parameter corresponding to the initial gear and a gear characterization parameter corresponding to the new target gear, or according to a gear characterization parameter state when the interruption operation is performed and a gear characterization parameter corresponding to the new target gear.

It is to be noted that an example where the charging direction or the discharging direction and the gear characterization parameter adjustment value of the interruption are determined according to the gear characterization parameter state when the interruption operation is performed, the gear characterization parameter corresponding to the initial gear and the gear characterization parameter of the new target gear is used for illustrating the embodiment in detail. In addition, in other embodiments, the charging direction or the discharging direction and the gear characterization parameter adjustment value may also be determined according to the gear characterization parameter state when the interruption operation is performed and the gear characterization parameter of the new target gear.

The gear characterization parameter state when the interruption operation is performed is mainly used for reflecting a current state when the interruption operation is performed. The gear characterization parameter state when the interruption operation is performed may be acquired in multiple manners. For example, different gear characterization parameter states correspond to different acquisition manners; or the same gear characterization parameter state may be acquired in multiple manners.

For example, if the gear characterization parameter state is set to a real-time charge capacity change value of the electrochromic device, the gear characterization parameter state may be directly monitored and calculated. If the gear characterization parameter state is set to a current gear of the electrochromic device, the gear characterization parameter state may also be recognized by a corresponding electrical parameter used for characterizing a gear, for example but not limited to, by the current open circuit voltage, transmittance of a current electrochromic state and an acquired current charge capacity of the electrochromic device.

Exemplarily, according to the acquired gear characterization parameter state and the gear characterization parameter corresponding to the corresponding target gear, whether to perform charging or discharging after the interruption operation and how many specific adjustments are required can be determined through the difference between the current state and a target gear state.

S130 of adjusting to the new target gear includes that the electrochromic device is adjusted to switch to the new target gear according to the charging direction or the discharging direction and the gear characterization parameter adjustment value.

Exemplarily, after the corresponding adjustment direction is determined, the state when the interruption operation is performed is used as adjustment reference, and then the corresponding gear characterization parameter of the electrochromic device is adjusted based on the adjustment value according to the determined charging direction or discharging direction. For example, in an implementation, the gear characterization parameter adjustment value may be a charge capacity that the electrochromic device needs to be supplemented with or to release.

In an optional solution, during the process of gear switching, the current charge capacity of the device may also be directly obtained by monitoring the OCV and based on a fitting functional relationship between the charge capacity and the OCV. Then, the difference between the current charge capacity of the device and the capacity of the target gear to be switched to is calculated to obtain the required supplementary capacity value and the charging direction or the discharging direction. At this time, it is not necessary to monitor the change value of the charge capacity of the device in real time during the entire color change process.

According to the gear switching control method for an electrochromic device in the embodiment, logic of interruption processing is added to the gear switching operation process. Corresponding target gear information is acquired, charging or discharging is suspended or stopped, then the charge capacity for charging or discharging required as the adjustment for switching from the current state to the new gear is calculated, and then the adjustment of charging or discharging is directly performed. In this manner, the problem that switching to an initial target gear is required before switching to a new target gear in the prior art can be solved; for the user, especially in scenes where accidental touch occurs or real-time gear switching is required, the waiting time of the user can be reduced, response to the gear switching interruption operation by the user is accelerated, and the user experience is improved.

Next, other embodiments of the present application will be described in detail with reference to the drawings.

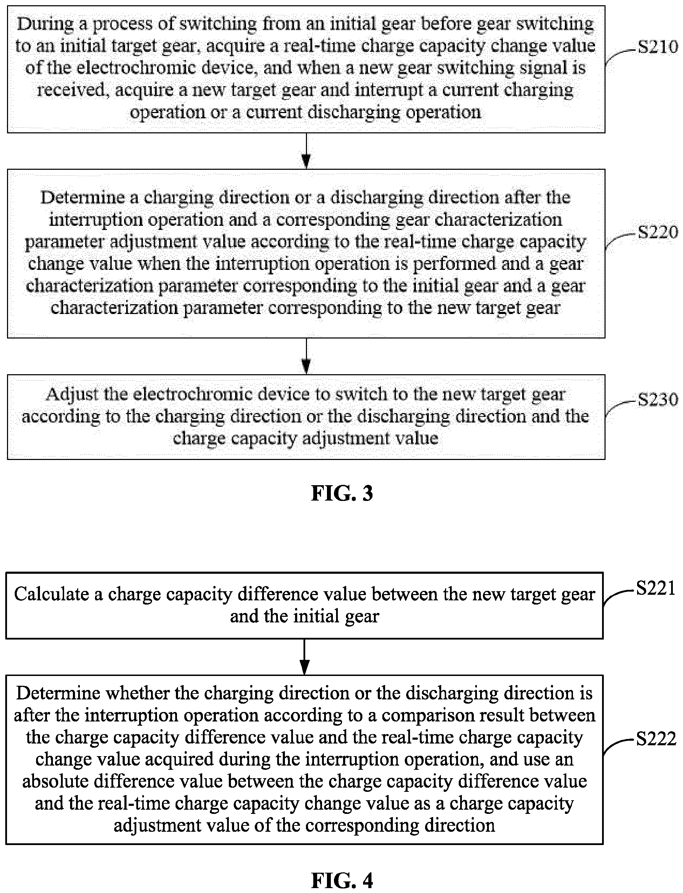

FIG. 3 is a second flowchart of a gear switching control method for an electrochromic device according to an embodiment of the present application. In the embodiment, the gear characterization parameter data mainly includes charge capacity data of the electrochromic device at different gears.

Exemplarily, the gear switching control method for an electrochromic device includes steps described below.

In S210, during a process of switching from an initial gear before gear switching to an initial target gear, a real-time charge capacity change value of the electrochromic device is acquired, and when a new gear switching signal is received, a new target gear is acquired and a current charging operation or a current discharging operation is interrupted.

In S220, a charging direction or a discharging direction after the interruption operation and a corresponding gear characterization parameter adjustment value are determined according to the real-time charge capacity change value when the interruption operation is performed and a gear characterization parameter corresponding to the initial gear and a gear characterization parameter corresponding to the new target gear.

The gear characterization parameter state when the interruption operation is performed in S120 above is the real-time charge capacity change value of the electrochromic device when the interruption operation occurs in the embodiment. Exemplarily, the change condition of a charge capacity input into or released from the electrochromic device may be monitored in real time to obtain the preceding real-time charge capacity change value.

Further, the step of determining the charging direction or the discharging direction and a corresponding charge capacity adjustment value exemplarily includes, as shown in FIG. 4, substeps described below.

In sub-step S221, a charge capacity difference value between the new target gear and the initial gear is calculated.

In sub-step S222, whether the charging direction or the discharging direction is after the interruption operation is determined according to a comparison result between the charge capacity difference value and the real-time charge capacity change value acquired when the interruption operation is performed, and an absolute value of the difference value between the charge capacity difference value and the real-time charge capacity change value is used as a charge capacity adjustment value of the corresponding direction.

For example, if the charge capacity corresponding to the initial gear S0 is denoted as QS0, the charge capacity corresponding to the new target gear S1 is denoted as QS1, the real-time charge capacity change value acquired when the interruption operation is performed is ΔQ, and then the charge capacity difference value TQ1 between the two gears satisfies that TQ1=QS1-QS0. At this point, the difference value TQ2 between the charge capacity difference value TQ1 between the two gears and the real-time charge capacity change value when the interruption operation is performed satisfies that TQ2=TQ1-ΔQ. If TQ2 is positive, it is indicated that an additional charge capacity is needed, and the charging direction is determined; otherwise, it is indicated that charge capacity release is required, and at this point, the discharge direction is determined. Correspondingly, |TQ1-ΔQ| represents the charge capacity adjustment value of the corresponding direction.

It could be understood that when a charge capacity parameter is selected as the basis for the gear adjustment, the adjustment value is calculated according to a capacity difference between the new target gear and the initial gear and the amount of a charge change from the initial gear of the device. In this manner, the same charge capacity reference is used for calculation, so that the accuracy of the calculation result can be ensured.

In S230, the electrochromic device is adjusted to switch to the new target gear according to the charging direction or the discharging direction and the charge capacity adjustment value.

S230 is the same as S130 above, which is not repeated here.

In the gear switching process of the gear switching control method for an electrochromic device in the embodiment, the interruption processing operation during the gear switching process is achieved by using related information such as the charge capacity. Since the capacity can be detected in real time during the charging or discharging process, the charge capacity parameter is selected to characterize the degree of gear switching; the measurement results have good real-times performance, so that gear switching time can be saved during the gear interruption, and thus the overall waiting time of the user is reduced.

Next, other embodiments of the present application are described in detail below with reference to the drawings.

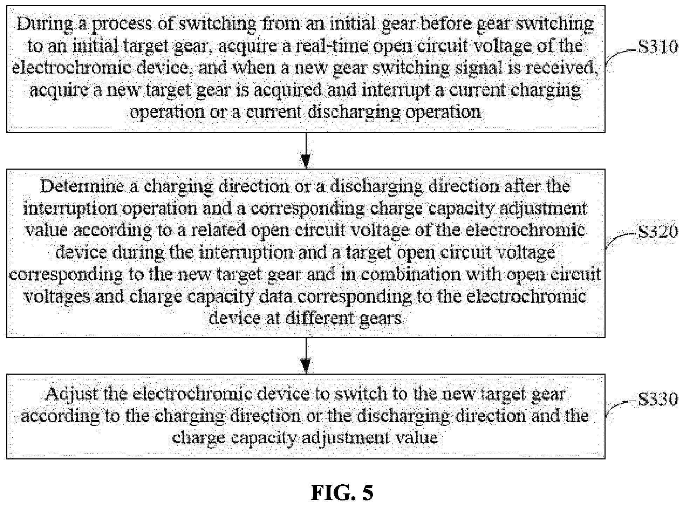

FIG. 5 is a third flowchart of a gear switching control method for an electrochromic device according to an embodiment of the present application.

In the embodiment, the gear characterization parameter data mainly includes open circuit voltages and charge capacity data corresponding to the electrochromic device at different gears. For example, a relationship between open circuit voltages of the device and charge capacities of the device may be pretested, and function fitting is performed so that a functional relationship of gears/transmittance, open circuit voltages and charge capacities is obtained. Data stored in the device may preferably be the preceding functional relationship or a matrix table formed by specific data calculated through the preceding functional relationship, which is not limited here. The gear characterization parameter state is the open circuit voltage (OCV) of the electrochromic device. The open circuit voltage of the electrochromic device may be a real-time open circuit voltage at a current moment or an interruption open circuit voltage at an interruption moment.

In the embodiment, transmittance is divided into countless gears based on the functional relationship of open circuit voltages and charge capacities corresponding to the electrochromic device at different gears, specifically, based on a functional relationship represented by a relationship of charge capacities, transmittance (gears) and OCVs of the electrochromic device, and each gear corresponds to a piece of transmittance and a corresponding OCV Finally, a functional relationship of capacities and OCVs satisfying that Q(X)=ax3+bx2+cx+d is used for achieving automatic dimming. Here is only one type of function, and the function may be a first-order linear function, a second-order function, a fifth order function, etc. The specific selection of the function mainly depends on material properties and the degree of fitting between the function and actual values. With the use of the device, the electrochromic device will age, and it is necessary to reconfirm the functional relationship between transmittance, OCVs and capacities. The functional relationship is used regardless of the current state and whether a first dimming instruction is completed.

In addition, the transmittance may also be divided into 11 gears, each gear corresponds to an OCV, and a relationship matrix table is formed between gears and charge capacities corresponding to OCVs.

In an optional solution, the method further includes the step of determining an interruption operation instruction.

Duration of time of charging/discharging for switching from the initial gear to the initial target gear is acquired, and a gear switching signal is received before the charging/discharging for switching from the initial gear to the initial target gear is completed.

An instruction for determining whether the switching from the initial gear to the initial target gear is interrupted includes the step described below. Duration of time of charging/discharging for switching from the initial gear to the initial target gear and a charged electricity quantity Q are acquired, and if the value of the charged Q is equal to a preset value and does not change within first preset time, it is considered that the switching from the initial gear to the initial target gear is completed. For example, in the current charging mode of switching from the initial gear to the initial target gear, it takes t1 time (30 seconds) to charge the electrochromic device with the electricity quantity Q (the value of the electricity quantity Q is acquired through software, and the charging time is just an example), and after the electricity quantity Q is charged, the OCV is stable after preset t2 time (60 seconds). Therefore, if a new target gear signal is received within t1+t2 time (30 seconds+60 seconds=90 seconds), it is considered that the switching is interrupted at this time. In addition, the OCV may be read in real time. If a change value of the OCV during preset time is within a preset range, the OCV is considered stable and consistent with the value of OCV1 at the initial target gear (during 60 seconds, the value of the OCV is 0.123V). In addition, whether the switching is interrupted may also be determined by measuring the value of the charged Q.

Exemplarily, the gear switching control method for an electrochromic device includes steps described below.

S310 of acquiring a gear characterization parameter state during interruption is that during a process of switching from an initial gear before gear switching to an initial target gear, a real-time open circuit voltage of the electrochromic device is acquired, and when a new gear switching signal is received, a new target gear is acquired and a current charging operation or a current discharging operation is interrupted.

S320 of determining a gear characterization parameter adjustment value is that a charging direction or a discharging direction after the interruption operation and a corresponding charge capacity adjustment value are determined according to a related open circuit voltage of the electrochromic device when the interruption operation is performed and a target open circuit voltage corresponding to the new target gear and in combination with open circuit voltages and charge capacity data corresponding to the electrochromic device at different gears.

In this embodiment, the preceding gear characterization parameter state when the interruption operation is performed may be a quantity related to the open circuit voltage of the electrochromic device when the interruption operation is performed. For example, the related open circuit voltage may refer to an open circuit voltage when the device stabilizes obtained through prediction after the interruption operation occurs (also known as a prediction open circuit voltage), or a measured open circuit voltage after the device stabilizes (also known as a stable open circuit voltage), or an open circuit voltage recorded when the interruption operation occurs (also known as an interruption open circuit voltage).

In an implementation, S310 of acquiring the gear characterization parameter state when operation is performed the interruption includes: To acquire the related open circuit when the interruption operation is performed, the interruption open circuit voltage (denoted as OCVinterruption) of the electrochromic device at the moment when the interruption operation occurs may be recorded, and after a wait of a first preset time period, an open circuit voltage after the electrochromic device stabilizes is predicted according to a rate of change of a real-time open circuit voltage of the electrochromic device during the preset time period so that gear information corresponding to the open circuit voltage after the electrochromic device stabilizes, that is, current gear information of the electrochromic device when the interruption operation is performed, is determined. In this manner, the open circuit voltage after the electrochromic device stabilizes can be obtained through OCV prediction, so that the time for the user to wait for the device to stabilize is reduced. It is to be noted that the relationship of charge capacities, transmittance (gears) and OCVs introduced in the embodiment represents a functional relationship; therefore, the transmittance of the electrochromic device may be divided into countless gears and each OCV corresponds to a gear, so that the gear information of the electrochromic device when the interruption operation is performed can be obtained after the OCV of the electrochromic device is determined.

S310 further includes the step described below. A correction factor of the open circuit voltage is determined according to a real-time open circuit voltage when the interruption operation occurs, and the prediction open circuit voltage when the electrochromic device stabilizes is predicted according to the correction factor. Specifically, a rate of change of the open circuit voltage during the first preset time may be calculated according to a real time measured open circuit voltage, and then the correction factor of the open circuit voltage is calculated; or the correction factor of the open circuit voltage may be calculated according to the current value of the real-time open circuit voltage.

Specifically, the open circuit voltage rate of change may be calculated (that is, (OCVreal time-OCVinterruption)/t1) according to the interruption open circuit voltage OCVinterruption and the real-time open circuit voltage after the first preset time t1 (donated as OCVreal time) so that the correction factor K of the open circuit voltage is determined. Then the preceding real-time open circuit voltage is corrected by using the correction factor K to obtain an open circuit voltage correction value as the prediction open circuit voltage when the electrochromic device stabilizes. It is to be understood that the value of K is introduced for correction, so that the accurate OCV can be calculated, then the accurate charge capacity adjustment value can be obtained, and thus the electrochromic device is ensured to be adjusted to a transmittance state corresponding to the target gear.

Optionally, in addition to using the open circuit voltages at the preceding two moments, more real-time open circuit voltages may also be collected before the device stabilizes and an average rate of change of the open circuit voltage can be calculated. Based on this average rate of change, a stable open circuit voltage after a period of time can be estimated. It is to be understood that since the real-time open circuit voltage is read before the device completely stabilizes, a deviation may exists on the read data, so that open circuit voltage correction is required.

In an implementation, the step of determining the correction factor K includes steps described below. In a case where the preceding open circuit voltage rate of change is equal to or approaches 0, the correction factor K is 0; in a case where the preceding open circuit voltage rate of change does not approach 0, that is, a deviation exists between the preceding open circuit voltage rate of change and 0, the correction factor K is positively correlated with an absolute value of the rate of change, that is, the larger the absolution value of the slope, the larger the value of K. It is to be noted that when the open circuit voltage rate of change is equal to or approaches 0, it may be considered that switching from the initial gear to the initial target gear is completed or almost completed. It can be explained that correcting the value of the OCV by using the slope not only is applicable to the control logic of interruption, but also can be applied to the control logic of the entire electrochromic device. For example, if switching from the initial gear to a first target gear is completed, after the stabilization, the rate of change of the OCV approaches 0, and the correction factor K for the real-time open circuit voltage is 0 at this time; if switching from the initial gear to the first target gear has not been completed, the OCV does not stabilize at this time, then the correction value is calculated according to the rate of change of the OCV, and the open circuit voltage when the device stabilizes is predicted by using the correction value. Therefore, the rate of change of the OCV not only can enable the electrochromic device to reaches the new target gear of the interruption, but also is applicable to the control logic of the entire electrochromic device. Through the rate of change of the OCV, no additional control logic needs to be set to complete the switching from the initial gear to the initial target, and the operation of a next interruption instruction can further be completed before the switching from the initial gear to the initial target is completed. In this manner, the control logic of the entire system is simple and easy to implement, and the calculation is simple. The specific control method is selected in combination with the OCV-Q-T relationship and the change condition of the value of the real-time open circuit voltage. Therefore, not only any switching between gears can be completed, but also the new target gear is quickly reached when the switching of the initial gear has not been completed, so that the user experience is improved.

In another implementation, after the interruption operation occurs, the value of the OCV will be attenuated over time and stabilize after a certain time, so that the method further includes the step described below. OCV values corresponding to at least two time points during the first preset time are acquired to establish an attenuation function of the OCV and the time t. The value of K can be determined according to the attenuation function of the OCV and the time t. Therefore, according to the pre-stored function of the OCV and the time t, the value of K corresponding to any moment t after the time when the interruption operation is performed can be calculated through the function when correction is started at the moment t. For example, since the device stabilizes generally after 2 minutes (120 seconds) after the interruption, the attenuation function of the OCV and the time t within 2 minutes (for more accurate data, the attenuation function within 5 minutes or a longer time may be established) is established. After the interruption, correction is performed not immediately but after 10 seconds. Therefore, the value of K can be determined according to the slope at the tenth second corresponding to the attenuation function of the OCV and the time t. If the difference between the value of the OCVinterruption when the interruption operation is performed and the value of the target OCV is relatively large, it takes a longer time for the device to stabilize. The device stabilizes first, then the correction value is automatically calculated according to the time required for stabilization, and the actual difference value between the OCVs is calculated. Therefore, through the method, automatic, convenient and precise correction can be achieved, and the target gear can be reached accurately. In addition, different temperatures may correspond to different attenuation functions of the OCV. Different areas of the electrochromic device may correspond to different attenuation functions of the OCV. An attenuation function, that is, y=a*x+b, which can fit the OCV over time is provided in the present disclosure, so that the prediction of the OCV is achieved according to the rate of change corresponding to a certain moment. Therefore, during the interruption process of the electrochromic device, the target rate of change can be reached more quickly and accurately, the waiting time of the user is reduced, and the user experience is improved.

Generally, the OCVinterruption of the electrochromic device when the interruption operation is performed usually starts to gradually stabilize after the preset time of, such as, 2 seconds from the interruption moment (in other embodiments, the electrochromic device stabilizes at different time points depending on different areas of the electrochromic device and different current temperatures). Therefore, a linear fitting is performed according to the change value of the OCV within 2 seconds, measurement is performed again after the 2 seconds to obtain the current real-time OCV, and the value of K is determined according to the real-time OCV after the 2 seconds and the rate of change of the OCV within the 2 seconds. Specifically, an example where a 300 millimeters × 300 millimeters is charged at the temperature of 25°C is illustrated. The charging direction is after the interruption operation, the interruption open circuit voltage when the interruption operation is performed is read, real-time open circuit voltages within 2 seconds after the interruption operation are read, and then the function that y=a*x+b is fitted, where the value of K is affected by the value of the rate a of change. During charging, the OCV when the interruption operation is performed is virtual high, and at this point, the OCV starts to be attenuated until stabilizing, so that the value of a is negative value. Referring to Table 1, during 2 seconds, if the value of the rate a of change of the OCV is greater than or equal to -0.017, the value of K is 0.05V for compensation; if the value of a is greater than or equal to -0.03 and is less than -0.017, the value of K is 0.09V for compensation; if the value of a is less than -0.03, it is represented that the rate of change is relatively large at this time, and the compensation value corresponding to the value of K is 0.13V. The attenuation function of the OCV and the time T during discharging or under other conditions is different and the rate of change is also different, but for the general principle, reference may be made to the preceding principle, which is not repeated here.

**Table 1**

| Range of the OCV of the material system: -0.9V to +0.9V | | |
|---|---|---|
| Charging manner | Value of a (the rate of change within 2 seconds as an example) | Value of K for compensation (unit: V) |
| | | temperature of 25°C |
| Charging | a≥-0.017 | 0.05 |
| | -0.03≤a<-0.017 | 0.09 |
| | a<-0.03 | 0.13 |

In the embodiment, the correction factor K required for correction is calculated after a two-second wait, and the value of the OCV is compensated for through the correction factor, so that the electrochromic device can quickly reaches target transmittance without waiting for an excessively long time required for stabilization, thus the waiting time of the user is reduced, and the user experience is improved.

In the embodiment, when the operation that the correction factor of the open circuit voltage is determined by using the rate of change of the OCV during the first preset time to predict the open circuit voltage when the electrochromic device stabilizes is applied to the entire gear switching logic, the specific method includes steps described below. When a dimming instruction is received, a current actual open circuit voltage is acquired and the real-time open circuit voltage during the first preset time is acquired for calculating the rate of change of the real-time open circuit voltage during the first time. The correction value of the real time open circuit voltage is determined according to the rate of change of the real time open circuit voltage. A target open circuit voltage corresponding to the dimming instruction is calculated according to the correction value of the real time open circuit voltage.

In another implementation, the attenuation trend of the OCV over time is generally the same, so that the value of K may be selected according to the magnitude of the current real-time open circuit voltage OCVreal time, that is, the correction parameter of the open circuit voltage is determined according to the magnitude of the current OCVreal time. For example, if an absolute value of the OCVreal time is less than or equal to a first preset value (such as 1V), the value of K is 0 at this time; if the OCVreal time is greater than a second preset value (such as +1V), the value of K is a negative value at this time; if the OCVreal time is less than a third preset value (such as -1V), the value of K is a positive value at this time. It is to be understood that for the OCVreal time in different ranges, the deviation of the OCV is different. Therefore, a different value of K is selected to obtain a more accurate OCV, which is conducive to the quicker adjustment to the dimming state corresponding to the desired target gear. In addition, whether the value of K is a positive value or a negative value is related to whether the charging direction or the discharging direction is after the interruption operation. If the new target gear is in the charging direction, the value of K is a negative value; if the new target gear is in the discharging direction, the value of K is a positive value. That is, if it is required to switch to a new target gear, whether the new target gear is in the charging direction or the discharging direction is determined. If the new target gear is in the charging direction, the absolute value of the value of K is subtracted from the current value of the OCV; if the new target gear is in the discharging direction, the absolute value of the value of K is added to the current value of the OCV.

In other embodiments, the attenuation trend of the OCV over time is generally the same, and different actually measured values of the OCV correspond to different values of K. Specifically, a relationship between the OCV and the value of K may also be represented as a matrix table relationship. For example, Table 2 shows OCV data of a certain electrochromic device measured during charging/discharging. It can be seen that during the charging/discharging process, the value of the OCV will change at the same temperature, and different ranges of the OCV correspond to different values of K. For another example, in the discharging process, different ranges of the OCV at different temperatures (such as 25°C and 85°C) may correspond to the same or different values of K.

**Table 2**

| Range of the OCV of the material system: -0.9V to +0.9V | | | |
|---|---|---|---|
| Charging manner | Actually measured range of the OCV (unit: V) | Correction factor K (unit: V) | |
| | | 25°C | 85°C |
| Charging | 0.8 to 0.9 | 0.05 | / |
| | 0.5 to 0.8 | 0.09 | 0.09 |
| | -0.4 to 0.5 | 0.13 | 0.13 |
| Discharging | 0.1 to 0.9 | 0.09 | 0.09 |
| | -0.7 to 0.1 | 0.13 | 0.13 |
| | -0.7 to -0.9 | 0.18 | 0.13 |

Specifically, if the temperature is 25°C, when charging is required to switch to the new target gear and the OCV when the interruption operation is performed is 0.8V, at this time, the corrected OCV is calculated through that OCV=0.8-0.05=0.795 (V), and then the current gear is obtained by using 0.795 (V) and in combination with the relationship between the capacity and the OCV. For another example, if discharging is required to switch to the new target gear and the measured OCV is -0.8, at this time, the corrected OCV is calculated through that OCV=-0.8-0.18=0.98 (V), and then the current gear is obtained by using -0.98 (V) and in combination with the relationship between the capacity and the OCV.

In another implementation, S310 of acquiring the gear characterization parameter state when the interruption operation is performed includes the step described below. The related open circuit voltage when the interruption operation is performed may be acquired through a wait of a second preset time period, where the second preset time period is longer than the preceding first preset time period. That is, after the device stabilizes, a current open circuit voltage of the electrochromic device is directly read, and thus the current gear of the device when the interruption operation is performed is determined. For example, the first preset time period may be 30 seconds, and the second preset time period may be 60 seconds, 100 seconds, etc., which may be set according to actual requirements and is not limited here. Generally, for a one-square-meter blue electrochromic device, after the interruption operation, the OCV of the device stabilizes after a wait of 2 minutes. The time required for stabilization of the OCV is related to the material system of the device and is also positively correlated with the area of the electrochromic device.

Due to the characteristics of the electrochromic device, when a constant voltage is applied to the electrochromic device, the potential distribution on the transparent conductive electrode is uneven, and the potential close to two input electrodes of the power supply is high, leading to that colors of regions of the two electrodes of the power supply change first. Due to the large internal resistance of the transparent conductive electrode, the potential relatively far from the electrode is relatively low, which cannot provide a sufficient voltage for the electrochromic material to react. At this time, the transmittance of the regions of the two electrodes is inconsistent with the color change of the central region. Therefore, a longer waiting time is required to make the center slowly achieve the required transmittance, so that the transmittance of the entire electrochromic device tends to be consistent.

It is to be understood that a wait of a certain time is to enable charges to be evenly distributed in the device, so that a more accurate value of the OCV is obtained to determine the current gear. The longer the waiting time is, the more evenly the charges are distributed in the device. At this time, the open circuit voltage after the device stabilizes is directly read to obtain the more accurate current gear.

It is to be noted that any preset time period set here is much shorter than the waiting time for the electrochromic device to switch to the initial target gear and then to the new target gear. For example, a large-sized electrochromic device switching from a first gear to a fifth gear for color change generally takes more than 1 minute or even longer. At this time, the preceding preset time period may be selected as a value within 10 seconds to 20 seconds. It is to be understood that the preceding first preset time period and the preceding second preset time period may be selected according to the actual color-change dimension or area of the device. It is to be understood that the color change area of the device may be pre-stored in the electrochromic device before the electrochromic device leaves the factory.

In an implementation, S320 includes the step of calculating the charge capacity adjustment value based on the prediction open circuit voltage or the stable open circuit voltage, specifically including the step described below. The charging direction or the discharging direction after the interruption operation and the corresponding charge capacity adjustment value are determined according to the prediction open circuit voltage or the state open circuit voltage and the target open circuit voltage of the new target gear and in combination with the open circuit voltages and the charge capacity data corresponding to the electrochromic device at the different gears. For example, an actual current gear when the interruption operation is performed can be determined according to the open circuit voltage after the electrochromic device stabilizes, and then whether the charging direction or the discharging direction is after the interruption operation is determined according to the new target gear and the level of the current gear. For example, if the new target gear is higher than the current gear, the charging direction is determined; otherwise, the discharging direction is determined. A difference value between the target open circuit voltage and the open circuit voltage after the electrochromic device stabilizes is calculated, and then the open circuit voltage difference value is substituted into the preceding functional relationship so that the corresponding required charge capacity adjustment value can be calculated.

S330 of adjusting to the new target gear includes that the electrochromic device is adjusted to switch to the new target gear according to the charging direction or the discharging direction and the charge capacity adjustment value.

S330 is the same as S 130, which is not repeated here.

In addition, considering that the acquisition of the real-time open circuit voltage requires the wait of at least the preceding first preset time period, the embodiment further provides another adjustment solution based on the open circuit voltage. In this solution, the charge capacity adjustment value is calculated according to the interruption open circuit voltage when the interruption operation occurs; that is, a theoretical charge quantity is calculated in combination with the interruption open circuit voltage and the functional relationship of the OCV and a charge quantity Q so that the electrochromic device is adjusted close to the new target gear, then the stable OCV is obtained after the wait of a time required for stabilization, the OCV difference value between the OCV after the electrochromic device stabilizes and the OCV of the target gear is calculated, a fine adjustment is performed as a second adjustment for compensation, and thus the new target gear can also be reached. In this adjustment solution, a certain quantity of Q is charged first so that the electrochromic device changes the color towards the dimming state of the new target gear. The electrochromic device is adjusted towards the dimming state of the new target gear visually, and stepless dimming is performed to reduce the last difference when the user waits for stabilization currently, so that the visual difference and change of the user is reduced, eyes of the user are allowed to gradually adapt to the light change, and thus the user experience is improved.

The related open circuit voltage when the interruption operation is performed in preceding S320 may also refer to the open circuit voltage read immediately when the interruption operation occurs. In another implementation, preceding S320 includes the step of calculating the charge capacity adjustment value based on the interruption open circuit voltage, and the step of performing a readjustment based on the adjusted stable open circuit voltage after the electrochromic device is adjusted according to a charge capacity calculated through the interruption open circuit voltage, specifically including the step described below.

The charging direction or the discharging direction after the interruption operation and the corresponding charge capacity adjustment value are determined according to the interruption open circuit voltage of the electrochromic device when the interruption operation is performed and the target open circuit voltage of the new target gear and in combination with the open circuit voltages and the charge capacity data corresponding to the electrochromic device at the different gears. For example, if the interruption open circuit voltage read at the moment when the interruption occurs is denoted as OCVinterruption, and the target open circuit voltage is denoted as OCVtarget, the charge capacity adjustment value satisfies that ΔOCV=OCVtarget-OCVinterruption, that is, the charge capacity as an adjustment is ΔOCV. ΔQ required for charging to achieve ΔOCV can be determined in combination with the open circuit voltages and the charge capacity data corresponding to the electrochromic device at the different gears.

Since the interruption open circuit voltage immediately read is not accurate, after the initial adjustment on the electrochromic device according to the charge capacity calculated according to the interruption open circuit voltage, the electrochromic device needs to be readjusted. After the preceding charge capacity adjustment value ΔQ is controlled to be charged or released, the readjustment includes steps described below. After a third preset time period is waited for, and when a gear switching signal of the new target gear is re-received, a currently adjusted stable open circuit voltage is acquired. A required charge capacity supplementary value is determined according to the adjusted stable open circuit voltage and the target open circuit voltage of the new target gear and in combination with the open circuit voltages and the charge capacity data corresponding to the electrochromic device at the different gears. The electrochromic device is readjusted according to the charge capacity supplementary value to reach the new target gear.

Exemplarily, the charging/discharging adjustment on the device is controlled according to the charge capacity adjustment value ΔQ calculated based on the interruption open circuit voltage. For example, after the second preset time period t2, the open circuit voltage tends to stabilize, and the current stable open circuit voltage is denoted as OCVstable; at this time, the same gear switching instruction of the new target is re-sent, and a currently existed open circuit voltage difference value ΔOCVsupplementary of the device can be calculated according to a difference value between the stable open circuit voltage OCVstable and the OCVtarget, that is, according to that OCVtarget-OCVstable=ΔOCVsupplementary. Then, the ΔOCVsupplementary is substituted into the preceding functional relationship so that the required charge capacity supplementary value ΔQsupplementary is calculated, and the charge capacity supplementing is controlled so that the device reaches the new target gear.

Optionally, when the charge capacity supplementing is performed, the magnitude of charge capacity supplementary value ΔQsupplementary may be determined (or, in combination with the current device or the temperature of the environment) so that the corresponding charging /discharging mode is determined, and thus the charge capacity supplementing can be performed according to the suitable mode. Therefore, in an implementation, before the electrochromic device is readjusted according to the charge capacity supplementary value, the step described below is further included. The corresponding charging or discharging mode is determined according to the magnitude of the charge capacity supplementary value. For example, the charging or discharging mode may include cases described below.

If the charge capacity supplementary value ΔQsupplementary is greater than the first preset value, the charge capacity supplementary value ΔQsupplementary is controlled to be charged or released according to a preset large current manner. That is, it is indicated that a significant charge capacity difference exists from the new target gear, and thus a large current manner is used to directly charge the ΔQsupplementary, so that the target gear can be quickly reached, and the visual error of the user is reduced.

If the charge capacity supplementary value ΔQsupplementary is between the first preset value and the second preset value, the charge capacity supplementary value ΔQsupplementary is divided into N equal parts, and the same charge capacity ΔQsupplementary/N is charged or released each time until the adjustment is completed, where N≥1 and the first preset value is less than the second preset value. It is to be understood that the charging of the same charge capacity each time brings the visual effect of gradual and slow changes to the user, reducing the visual impact.

If the charge capacity supplementary value ΔQsupplementary is less than the second preset value, the charge capacity supplementary value ΔQsupplementary is controlled to be charged or released in a preset small current manner or a manner where the current is gradually reduced. That is, it is indicated that the charge capacity difference value between the current gear and the new target gear is relatively small, so that the magnitude of the current I is limited. For example, the supplementing may be performed in the manner that I*T=ΔQ, so that overcharging or overdischarging caused by the excessive large current is avoided. Therefore, when I is small enough and the charging/discharging time is longer, the effect of gradually dimming is achieved, and the visual impact on the user is smaller.

It is to be understood that the preset large current manner in case (1) refers to that compared with the preset small current manner in case (3), the current value for charge capacity supplementing in case (1) is larger than the current value for charge capacity supplementing in case (3). Values of these two currents may be set according to actual requirements and are not limited here. According to the charging manner that the value of Q is selected according to the OCV supplementary value, the new target gear can be quickly reached when needed, the user visual error can be minimized, and the user experience is enhanced.

Two adjustment solutions are illustrated above. The prediction open circuit voltage or the stable open circuit voltage is obtained and then the charge capacity adjustment value is calculated according to the prediction open circuit voltage or the stable open circuit voltage so that a single adjustment is performed, where the stable open circuit voltage refers to the open circuit voltage read after the device waits for the second preset time; the charge capacity adjustment value is calculated according to the interruption open circuit voltage when the interruption operation occurs and the readjustment is performed after the initial adjustment. Before the adjustment is performed in the embodiment, one of the two adjustment solutions is selected according to the specific situation to improve the adjustment efficiency. Of course, optionally, after one manner is used for the adjustment, the other manner is also used for the subsequent adjustment.

In an implementation, the gear switching control method for an electrochromic device further includes steps described below. A difference value between the interruption open circuit voltage OCVinterruption acquired when the interruption operation occurs and the target open circuit voltage OCVtarget of the new target gear; and if the difference value (that is, AOCV=OCVtarget-OCVinterruption) is within a first preset range, the step of calculating the charge capacity adjustment value based on the prediction open circuit voltage is performed, that is the correction step for the OCVreal time is performed. Since the OCVinterruption is relatively far from the target OCV at this time, if the second preset time is waited for, the time required for stabilization will be relatively long, the user needs to wait for a relatively long time, and thus the user experience is affected.

If the difference value is within a second preset range, the step of calculating the charge capacity adjustment value based on the interruption open circuit voltage is performed, and the electrochromic device is adjusted according to the charge capacity calculated according to the interruption open circuit voltage, where an absolute value of a value in the second preset range is less than an absolute value of a value in the first preset range. Different adjustment manners are selected according to the magnitude of the interruption open circuit voltage OCVinterruption, so that the desired dimming effect can be achieved more quickly.

For example, the initial target gear is the eleventh gear, where the OCV corresponding to the eleventh gear is 0.13 V. When the interruption operation occurs, if the currently monitored interruption open circuit voltage is 0.11 V (this is not a stable value and tends to stabilize over time), and the new target gear is the tenth gear, where the OCV corresponding to the tenth gear is 0.12V, it can be seen that the interruption open circuit voltage OCVinterruption is very close to 0.12V (does not exceed 0.01V) at this time, so that the adjustment may be directly performed based on the current interruption open circuit voltage preferably, and then the second fine adjustment is performed based on the OCV deviation after the adjustment to reach the new target gear (the tenth gear). That is, when the process of switching from the initial gear to the initial target gear is almost completed, the actual value of the OCV is actually very close to the new target value and does not need correction and thus is directly based on the current calculation or supplement. Therefore, the switching from the interruption to the new target gear is accelerated.

For another example, the new target gear is the fifth gear or the fifteenth gear, where the OCV corresponding to the fifth gear is 0.7V, and the OCV corresponding to the fifteenth gear is 0.2V. It can be seen that the interruption open circuit voltage OCVinterruption at this time is far away from 0.2V (or 0.7V), so that the preceding operation that the charge capacity adjustment value is calculated based on the open circuit voltage after the electrochromic device stabilizes obtained through prediction or the stable open circuit voltage obtained after the wait of a period of time may be selected preferably to reach the new target gear (the fifth gear or the fifteenth gear).

Since the open circuit voltage after the electrochromic device stabilizes obtained through the prediction still does not accurately reach the target value after charging or discharging, at this time, whether the transmittance reaches a preset value may be detected. If not, a new target gear instruction is sent, the open circuit voltage after the electrochromic device stabilizes is acquired, the charge quantity required as a supplement is determined, and the supplementary charge quantity is controlled to be charged. Therefore, after the step of calculating the charge capacity adjustment value based on the open circuit voltage after the electrochromic device stabilizes obtained through the prediction is performed, whether current transmittance is equal to the target transmittance. If not, a target gear instruction is re-sent, the open circuit voltage after the electrochromic device stabilizes is acquired, the charge quantity required as a supplement is determined, and the supplementary charge quantity is controlled to be charged.

According to the gear switching control method for an electrochromic device in the embodiment, the interruption processing operation during the gear switching process is achieved in combination with the open circuit voltage and the charge capacity. When the current gear is acquired through the open circuit voltage, whether the current value of the OCV is corrected through the value of K or is directly obtained after the electrochromic device stabilizes or whether the OCV is preliminarily adjusted and then is supplemented with the charge quantity may be determined after a delay. Multiple aspects are considered, and the optimal manner is selected, so that a more accurate stable open circuit voltage can be obtained more quickly, and thus more accurate gear adjustment information is acquired.

In other embodiments, before the selection step is performed, whether the absolute value of the OCVinterruption is greater than a preset value is determined, and whether the charging direction conforms to a preset charging direction or whether the difference value between the OCVinterruption and the OCVtarget is less than a preset value is determined; if yes, the step of calculating the charge capacity adjustment value based on the stable open circuit voltage after the device stabilizes after the wait of the second preset time is performed. Referring to Table 2, during the charging process, when the value of the OCV is within 0.7V to 0.9V, whether the temperature is 25°C or 85°C, the correction value of the OCV is very small and even not considered. At this time, the attenuation of the OCV is not significant, and thus it is easy for the OCV to reach a stable value. After the direct wait for stability, the desired effect can be achieved quickly, and the user experience is improved.

In the embodiment, the open circuit voltage of the electrochromic device is used as the gear characterization parameter state, so that the electrochromic device is adjusted to reach the new target gear more accurately and quickly, thus the waiting time of the user is reduced, and the user experience is improved. An example where the room temperature is 25°C is illustrated, and the process involved in the embodiment includes steps described below. When the instruction of switching to the initial target gear is received, the charging or discharging of the electrochromic device is controlled according to the OCV-Q-T functional relationship. Before the switching from the initial gear to the initial target gear is completed, an instruction of switching to the new target gear is received. The interruption open circuit voltage of the electrochromic device at this time is acquired. Whether the absolute value of the OCVinterruption is greater than the preset value; if yes, and the charging direction is after the interruption, the open circuit voltage is obtained after stabilization through the wait of the second preset time; if no, whether the difference value between the interruption open circuit voltage OCVinterruption and the target open circuit voltage OCVtarget of the new target gear is within the first preset range is determined; if yes, the correction value of the OCV is calculated, and the open circuit voltage after the electrochromic device stabilizes is predicted according to the correction value; if the difference value is within the second preset range, charging is performed by using the interruption open circuit voltage and then supplementary charging is performed. In the embodiment, the optimal gear characterization parameter adjustment value is obtained by using the value of the OCV of the device when the interruption operation is performed, considering multiple aspects and in combination with the calculation of various parameters, so that the device can be adjusted to the new target gear more quickly and accurately, the waiting time of the user is further reduced, and the user experience is improved.

Next, other embodiments of the present application are described in detail below with reference to the drawings.

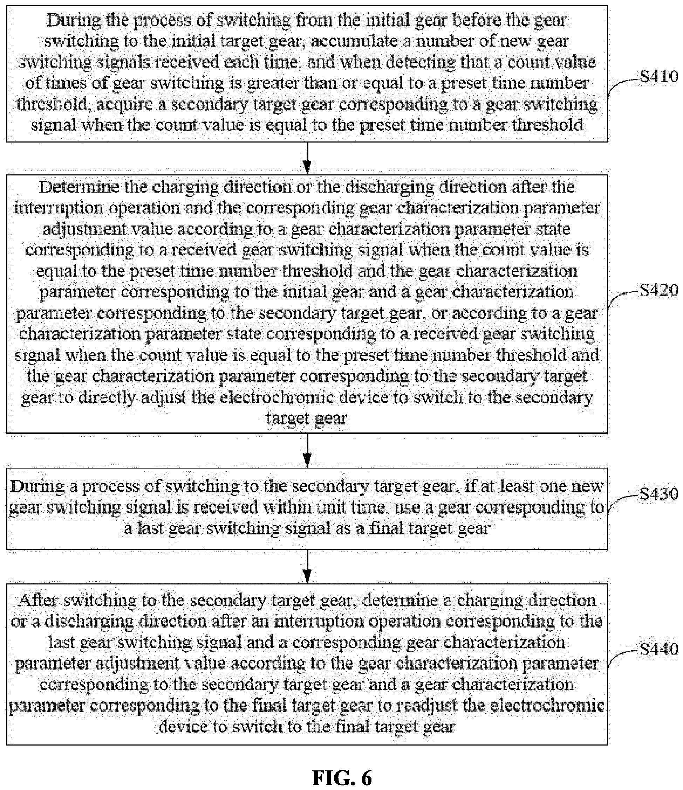

FIG. 6 is a flowchart of a gear switching control method for an electrochromic device according to an embodiment of the present application.

Based on the method described in any of the preceding embodiments, the embodiment further provides the limit on the number of times of gear switching, so as to avoid situations such as excessive adjustments or even damage to the lifespan of the device.

Exemplarily, as shown in FIG. 6, the gear switching control method for an electrochromic device includes steps described below.

In S410, during the process of switching from an initial gear before gear switching to an initial target gear, a number of new gear switching signals received each time is accumulated, and when it is detected that a count value of times of gear switching is greater than or equal to a preset time number threshold, a secondary target gear corresponding to a gear switching signal when the count value is equal to the preset time number threshold is acquired.

Exemplarily, a gear switching count value may be set for counting detected new gear switching signals during the process of the gear switching operation. Therefore, for each increase of one time, whether the count value reaches the preset time number threshold is determined. If the count value reaches the preset time number threshold, the corresponding secondary target gear is acquired from the gear switching signal when the count value is equal to the preset time number threshold. Generally, the secondary target gear and the previous initial target gear represent two different gears to be reached.

In S420, a charging direction or a discharging direction after an interruption operation and a corresponding gear characterization parameter adjustment value are determined according to a corresponding gear characterization parameter state according to a received gear switching signal when the count value is equal to the preset time number threshold and a gear characterization parameter corresponding to the initial gear and a gear characterization parameter corresponding to the secondary target gear or according to a gear characterization parameter state corresponding to a received gear switching signal when the count value is equal to the preset time number threshold and a gear characterization parameter corresponding to the new target gear so that the electrochromic device is directly adjusted to switch to the secondary target gear.

For steps of directly adjusting to the secondary target gear, reference may be made to the corresponding steps in the preceding embodiments, which is not repeated here.

It is to be understood that in the embodiment, if another target gear to be switched to is determined before the new target gear is reached, the electrochromic device may also be controlled to be directly adjusted to the secondary target gear during the switching process. The number of interruption times of the device is limited, so that excessive adjustments caused by the slow color change are reduced while the user's requirement of real-time adjustmenting the device is satisfied.

In addition, during the actual gear switching process, the user may operate excessively, triggering multiple gear switching operations in a short period of time. To reduce the damage to the device and avoid the omission of operation instructions of the user, multiple gear switching signals in a short period of time are processed in the embodiment so that requirements in certain specific scenes are satisfied.

Optionally, the gear switching control method for an electrochromic device further includes steps described below.

In S430, during a process of switching to the secondary target gear, if at least one new gear switching signal is received within unit time, a gear corresponding to a last gear switching signal is used as a final target gear. For example, the unit time may be 1 second, 2 seconds or 3 seconds, and the specific value may be set according to actual requirements.

In S440, after the secondary target gear is switched to, a charging direction or a discharging direction after an interruption operation corresponding to the last gear switching signal and a corresponding gear characterization parameter adjustment value are determined according to the gear characterization parameter corresponding to the secondary target gear and a gear characterization parameter corresponding to the final target gear so that the electrochromic device is readjusted to switch to the final target gear.

For example, the secondary target gear is the gear to be switched to during the third gear switching operation; if more gear signals are detected before the third gear switching operation is completed, such as the fourth gear switching signal or the fifth gear switching signal, the device will record each gear switching signal but do not perform the gear switching interruption operation, and continue to complete the supplementary charging or discharging of the third time of interruption. After the third time of gear switching is completed, the target gear of the last gear switching interruption signal recorded from the color change is switched to.

It is to be understood that in the actual gear switching process, a time lag exists between the moment when the user adjusts the gear and the moment when the device reaches the target gear, so that the user may misjudge the actual effect of the target gear before the target gear is reached and then perform the gear switching interruption adjustment. At this time, an excessive adjustment occurs, which actually affects the use by the user. For example, it takes only an instant for the user to complete the adjustment operation from the first gear to the fifth gear, but it takes 1 minute for the device to complete the change to the color of the fifth gear, where a time difference exists. At the 30th second, the device changes to the color of the third gear or the color of the fourth gear; however, the user misjudges the color change effect of the fifth gear according to the current color change effect of the device (actually, the fifth gear can satisfy the requirement of the user) and performs an interruption adjustment (for example, adjusting the device to the seventh gear). At this point, an excessive adjustment likely occurs, which affects the use by the user.

Therefore, if the user is not clear about the color change effect of each gear, multiple gear interruptions may occur, so that the device cannot be accurately and quickly adjusted to the most suitable gear, and damage can be caused to the lifespan of the device. According to the gear switching control method for an electrochromic device in the embodiment, the interruption times of gear switching are limited, so that the device can be adjusted to the most suitable gear, and the damage to the device can be minimized.

Next, other embodiments of the present application will be described in detail with reference to the drawings.

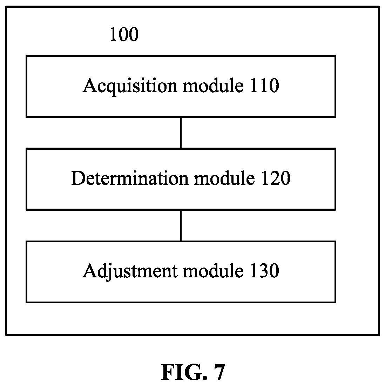

FIG. 7 is a structural diagram of a gear switching control apparatus for an electrochromic device according to an embodiment of the present application.

In the embodiment, the electrochromic device pre-stores gear characterization parameter data. Exemplarily, the gear switching control apparatus 100 for an electrochromic device includes:
an acquiring module 110, which is configured to, during a process of switching from an initial gear before gear switching to an initial target gear, acquire a gear characterization parameter state of the electrochromic device, and when a new gear switching signal is received, acquire a new target gear and interrupt a current charging operation or a current discharging operation;
a determing module 120, which is configured to determine a charging direction or a discharging direction after the interruption operation and a corresponding gear characterization parameter adjustment value according to the gear characterization parameter state when the interruption operation is performed and a gear characterization parameter corresponding to the initial gear and a gear characterization parameter corresponding to the new target gear or a gear characterization parameter corresponding to the new target gear; and
a adjusting module 130, which is configured to adjust the electrochromic device to switch to the new target gear according to the charging direction or the discharging direction and the corresponding gear characterization parameter adjustment value.

It is to be understood that the apparatus of the embodiment corresponds to the embodiments of the gear switching control method for an electrochromic device described above. The options in the preceding embodiments are also applicable to the embodiment, so that the description is not repeated here.

The present application further provides an electrochromic device, for example, a device integrated with electrochromic materials such as dimmable windows and car windshields. Exemplarily, the electrochromic device includes a processor and a memory. The memory stores a computer program. The processor runs the computer program to cause the electrochromic device to perform the preceding gear switching control method for an electrochromic device or functions of various modules in the preceding gear switching control apparatus for an electrochromic device.

The present application further provides a computer-readable storage medium configured to store the computer program used in the preceding electrochromic device.

It is to be understood that the apparatus and methods disclosed in the several embodiments of the present application may be implemented in other manners. The preceding apparatus embodiment is merely illustrative. For example, the flowcharts and the block diagram in the drawings illustrate possible implementation of architectures, functions and operations of the apparatuses, methods and computer program products according to the multiple embodiments of the present application. In this regard, each block in a flowchart or a block diagram may represent a module, a program segment or part of codes that contains one or more executable instructions for implementing specified logical functions. It is to be noted that, in some alternative embodiments, the functions noted in the blocks may be performed in an order different from the order noted in the drawings. For example, two sequential blocks may, in fact, be executed substantially concurrently, or sometimes executed in a reverse order, which depends on the involved functions. It is to be noted that each block in the block diagrams or flowcharts and combinations of blocks in the block diagrams or flowcharts may be implemented by not only specific-purpose hardware-based systems that perform specified functions or actions, but also combinations of specific-purpose hardware and computer instructions.

Additionally, functional modules or units in the embodiments of the present application may be integrated together to form an independent part, or each module may exist alone, or two or more modules may be integrated to form an independent part.

The functional modules may be stored in a computer-readable storage medium if implemented in the form of software function modules and sold or used as independent products. Based on this understanding, the technical solutions provided in the present application substantially, the part contributing to the related art, or part of the technical solutions, may be embodied in the form of a software product. This computer software product is stored in a storage medium, and includes several instructions for enabling a computer device (which may be a smart phone, a personal computer, a server, a network device or the like) to perform all or part of the steps in the methods provided in the embodiments of the present application. The storage medium includes a USB flash disk, a mobile hard disk, a read-only memory (ROM, Read-only Memory), a random access memory (RAM, Random Access Memory), a magnetic disk, an optical disc or another medium capable of storing program codes.

The above are just specific embodiments of the present application and are not intended to limit the scope of the present application. It is easy for those skilled in the art to conceive modifications or substitutions within the scope of the present application. These modifications or substitutions are within the scope of the present application.

### INDUSTRIAL APPLICABILITY

In summary, the present application provides a gear switching control method and apparatus for an electrochromic device and an electrochromic device. According to the gear switching control method and apparatus for an electrochromic device and the electrochromic device, the electrochromic device can be adjusted to a new target gear more accurately and quickly, so that the problem that the gear switching process is interrupted is solved. For the user, the gear switching waiting time of the user is reduced, the response to the gear switching interruption operation of the user is accelerated, and the user experience is improved.

## Claims

1. A gear switching control method for an electrochromic device, **characterized by** the electrochromic device pre-stores gear characterization parameter data and the gear switching control method comprises:
during a process of switching from an initial gear before gear switching to an initial target gear, acquiring a gear characterization parameter state of the electrochromic device, and when receiving a new gear switching signal, acquiring a new target gear and interrupting a current charging operation or a current discharging operation;
determining a charging direction or a discharging direction after the interruption operation and a corresponding gear characterization parameter adjustment value according to the gear characterization parameter state when the interruption operation is performed and a gear characterization parameter corresponding to the initial gear and a gear characterization parameter corresponding to the new target gear, or according to the gear characterization parameter state when the interruption operation is performed and a gear characterization parameter corresponding to the new target gear; and
adjusting the electrochromic device to switch to the new target gear according to the charging direction or the discharging direction and the corresponding gear characterization parameter adjustment value.

2. The gear switching control method for an electrochromic device according to claim 1, further comprising:
during the process of switching from the initial gear before the gear switching to the initial target gear, accumulating a number of new gear switching signals received each time, and when detecting that a count value of times of gear switching is greater than or equal to a preset time number threshold, acquiring a secondary target gear corresponding to a gear switching signal when the count value is equal to the preset time number threshold; and
determining the charging direction or the discharging direction after the interruption operation and the corresponding gear characterization parameter adjustment value according to a gear characterization parameter state corresponding to a received gear switching signal when the count value is equal to the preset time number threshold and the gear characterization parameter corresponding to the initial gear and a gear characterization parameter corresponding to the secondary target gear, or according to a gear characterization parameter state corresponding to a received gear switching signal when the count value is equal to the preset time number threshold and the gear characterization parameter corresponding to the new target gear to directly adjust the electrochromic device to switch to the secondary target gear.

3. The gear switching control method for an electrochromic device according to claim 2, further comprising:
during a process of switching to the secondary target gear, in a case where at least one new gear switching signal is received within unit time, using a gear corresponding to a last gear switching signal as a final target gear; and
after switching to the secondary target gear, determining a charging direction or a discharging direction after an interruption operation corresponding to the last gear switching signal and a corresponding gear characterization parameter adjustment value according to the gear characterization parameter corresponding to the secondary target gear and a gear characterization parameter corresponding to the final target gear to readjust the electrochromic device to switch to the final target gear.

4. The gear switching control method for an electrochromic device according to any one of claims 1 to 3, wherein the gear characterization parameter data comprises charge capacity data of the electrochromic device at different gears, and the acquired gear characterization parameter state comprises a real-time charge capacity change value input into or released by the electrochromic device;
wherein the acquiring the gear characterization parameter state when the interruption operation is performed comprises:
reading the real-time charge capacity change value recorded when the interruption operation is performed;
the determining a charging direction or a discharging direction after the interruption operation and a corresponding gear characterization parameter adjustment value according to the gear characterization parameter state when the interruption operation is performed and a gear characterization parameter corresponding to the initial gear and a gear characterization parameter corresponding to the new target gear comprises:
calculating a charge capacity difference value between the new target gear and the initial gear; and
determining the charging direction or the discharging direction after the interruption operation according to a comparison result between the charge capacity difference value and the real-time charge capacity change value acquired when the interruption operation is performed, and using an absolute value of the difference value between the charge capacity difference value and the real-time charge capacity change value as a charge capacity adjustment value of the corresponding direction.

5. The gear switching control method for an electrochromic device according to any one of claims 1 to 3, wherein the gear characterization parameter data comprises open circuit voltages and charge capacity data corresponding to the electrochromic device at different gears, and the acquired gear characterization parameter state comprises an open circuit voltage of the electrochromic device; and
wherein the acquiring the gear characterization parameter state when the interruption operation is performed comprises:
after waiting for a first preset time period, predicting a stable open circuit voltage according to a rate of change of a real-time open circuit voltage of the electrochromic device during the first preset time period to determine a current gear when the interruption operation is performed; or
after waiting for a second preset time period, reading a current open circuit voltage of the electrochromic device to determine a current gear when the interruption operation is performed; wherein the first preset time period is shorter than the second preset time period.

6. The gear switching control method for an electrochromic device according to claim 5, wherein the predicting the stable open circuit voltage according to the rate of change of the real-time open circuit voltage of the electrochromic device during the first preset time period comprises:
calculating the open circuit voltage rate of change during the first preset time according to an interruption open circuit voltage of the electrochromic device when the interruption operation is performed and a real-time open circuit voltage of the electrochromic device after the first preset time, and determining a correction factor of the open circuit voltage according to the open circuit voltage rate of change; and
correcting the real-time open circuit voltage by using the correction factor to obtain an open circuit voltage correction value and determine a prediction open circuit voltage when the electrochromic device stabilizes.

7. The gear switching control method for an electrochromic device according to claim 6, wherein the determining the correction factor comprises:
in a case where the open circuit voltage rate of change is equal to or approaches 0, and the correction factor is 0;
in a case where the open circuit voltage rate of change does not approach 0, and the correction factor is positively correlated with an absolute value of the open circuit voltage rate of change.

8. The gear switching control method for an electrochromic device according to claim 6, wherein the determining the charging direction or the discharging direction after the interruption operation and the corresponding gear characterization parameter adjustment value according to a gear characterization parameter state when the interruption operation is performed and a gear characterization parameter corresponding to the new target gear comprises:
the calculating a charge capacity adjustment value based on the interruption open circuit voltage specifically comprising: determining the charging direction or the discharging direction after the interruption operation and a corresponding charge capacity adjustment value according to the interruption open circuit voltage of the electrochromic device when the interruption operation is performed and a target open circuit voltage of the new target gear and in combination with the open circuit voltages and the charge capacity data corresponding to the electrochromic device at the different gears; or
the calculating a charge capacity adjustment value based on the prediction open circuit voltage or a stable open circuit voltage read after waiting for the second preset time period specifically comprising: determining the charging direction or the discharging direction after the interruption operation and a corresponding charge capacity adjustment value according to the prediction open circuit voltage or the stable open circuit voltage and a target open circuit voltage of the new target gear and in combination with the open circuit voltages and the charge capacity data corresponding to the electrochromic device at the different gears.

9. The gear switching control method for an electrochromic device according to claim 8, wherein the calculating the charge capacity adjustment value based on the interruption open circuit voltage, the method comprises:
after controlling the charge capacity adjustment value to be charged or released, after waiting for a third preset time period, and when re-receiving a gear switching signal of the new target gear, acquiring an adjusted stable open circuit voltage;
determining a required charge capacity supplementary value according to the adjusted stable open circuit voltage and the target open circuit voltage of the new target gear and in combination with the open circuit voltages and the charge capacity data corresponding to the electrochromic device at the different gears; and
readjusting the electrochromic device according to the charge capacity supplementary value to reach the new target gear.

10. The gear switching control method for an electrochromic device according to claim 9, further comprising:
calculating a difference value between the acquired interruption open circuit voltage and the target open circuit voltage of the new target gear; and
in a case where the difference value is within a first preset range, performing the step of calculating the charge capacity adjustment value based on the prediction open circuit voltage or the stable open circuit voltage;
in a case where the difference value is within a second preset range, performing the step of calculating the charge capacity adjustment value based on the interruption open circuit voltage, and performing a readjustment based on the adjusted stable open circuit voltage after adjusting the electrochromic device according to a charge capacity calculated through the interruption open circuit voltage; wherein an absolute value of a value in the second preset range is less than an absolute value of a value in the first preset range.

11. The gear switching control method for an electrochromic device according to any one of claims 1 to 10, before the switching from the initial gear to the initial target gear, further comprising:
when detecting that an initial gear switching signal is received, detecting a current open circuit voltage of the electrochromic device to determine a current actual gear, and using the current actual gear as the initial gear; and
acquiring the initial target gear from the initial gear switching signal, and subtracting a charge capacity corresponding to the initial gear from a charge capacity corresponding to the initial target gear to obtain a charge capacity required as an adjustment for switching from the initial gear to the initial target gear.

12. A gear switching control apparatus for an electrochromic device, **characterized by** comprising:
an acquiring module, configured to, during a process of switching from an initial gear before gear switching to an initial target gear, acquire a gear characterization parameter state of the electrochromic device, and when receiving a new gear switching signal, acquire a new target gear and interrupt a current charging operation or a current discharging operation;
a determining module, configured to determine a charging direction or a discharging direction after the interruption operation and a corresponding gear characterization parameter adjustment value according to the gear characterization parameter state when the interruption operation is performed and a gear characterization parameter corresponding to the initial gear and a gear characterization parameter corresponding to the new target gear, or according to the gear characterization parameter state when the interruption operation is performed and a gear characterization parameter corresponding to the new target gear; and
an adjusting module, configured to adjust the electrochromic device to switch to the new target gear according to the charging direction or the discharging direction and the corresponding gear characterization parameter adjustment value.

13. An electrochromic device, comprising a processor and a memory storing a computer program, wherein the processor is configured to execute the computer program to implement the gear switching control method for an electrochromic device according to any one of claims 1 to 11.

14. A readable storage medium storing a computer program which, when executed by a processor, implements the gear switching control method for an electrochromic device according to any one of claims 1 to 11.
